# FASCICULE DE BREVET EUROPEEN

(11) **EP 0 965 211 B1**
(45) Date de publication et mention de la délivrance du brevet: **10.11.2004**
(21) Numéro de dépôt: 98964530.4
(22) Date de dépôt: 28.12.1998
(51) Int. Cl.: H04L 29/12

(54) **PROCEDE DE COMMUNICATION DANS UN ENSEMBLE DE SYSTEMES DISTRIBUES VIA UN RESEAU DU TYPE INTERNET**
KOMMUNIKATIONSVERFAHREN IN EINER GESAMTHEIT VON VERTEILTEN SYSTEMEN ÜBER EIN NETZWERK VOM TYP INTERNET
COMMUNICATION METHOD IN A SET OF SYSTEMS VIA AN INTERNET TYPE NETWORK

(30) Priorité: 06.01.1998 FR 9800055
(43) Date de publication de la demande: 22.12.1999
(73) Titulaire: BULL S.A., 78430 Louveciennes (FR)
(72) Inventeur: HABERT, Michel, F-38120 Saint-Egreve (FR)
(74) Mandataire: Debay, Yves
(86) Numéro de dépôt international: PCT/FR1998/002890
(87) Numéro de publication internationale: WO 1999/035796

(56) Documents cités:
- B. CARPENTER: "IPng White Paper on Transition and Other Considerations" REQUEST FOR COMMENTS, vol. RFC, no. 1671, - août 1994 pages 1-6, XP002084640 http://www.pmg.lcs.mit.edu/cgi-bin/rfc/vie w?1671
- F. KASTENHOLZ: "Technical Criteria for Choosing IP The Next Generation (IPng)" REQUEST FOR COMMENTS, vol. RFC, no. 1726, - décembre 1994 XP002084641 http://www.pmg.lcs.mit.edu/cgi-bin/rfc/vie w?1726

## Description

La présente invention concerne un procédé de communication dans un ensemble de systèmes distribués sur un réseau de type internet.

L'invention concerne plus particulièrement le nommage, l'adressage et l'acheminement des informations entre les systèmes distribués, via un ou plusieurs réseaux ou sous-réseaux en technologie internet.

Dans le cadre de la présente invention, le terme "internet" doit être compris dans son sens le plus général. Il englobe notamment, outre le réseau "internet" proprement dit, les réseaux privés d'entreprises ou similaires, dits "intranet", et les réseaux les prolongeant vers l'extérieur, dits "extranet".

Il est également utile, dans un but de clarté, de rappeler quelques définitions utilisées dans la description de la présente invention.

On appellera ci-après "système" une unité, une machine de traitement de données informatiques ou, de façon plus générale, une plate-forme, disposant d'un système d'exploitation ("OS", selon la terminologie anglo-saxonne). Ces systèmes sont reliés entre eux par un ou plusieurs réseaux ou sous-réseaux, dont au moins une partie fait appel à la technologie internet, dans le sens qui vient d'être rappelé. Dans ce qui suit les termes "réseaux" ou "sous-réseaux" seront utilisés indifféremment.

Ces systèmes hébergent des "serveurs". Ceux-ci sont définis de façon générale comme étant un logiciel ou une entité logicielle rendant un service donné (par exemple un logiciel de transfert de fichier).

Dans la technologie internet, il est mis en oeuvre des adresses dites "IP". Une telle adresse est structurée et comprend une adresse de sous-réseau appelée préfixe et une adresse d'une entité à l'intérieur de ce sous-réseau.

Si on considère de nouveau un serveur, celui-ci est adressable, conformément à l'art connu, par une adresse "IP" telle qu'elle vient d'être définie et un numéro de port, que l'on désignera P_{*i*}, avec *i* indice arbitraire. Celui-ci comporte typiquement deux octets et permet d'atteindre le serveur *i* à l'intérieur du système.

En résumé, si un système, d'indice arbitraire 0, est référencé S₀, et est associé à une adresse "IP" notée "X,X₀" cela signifie que ce système S₀ est connecté au sous-réseau de préfixe X, avec comme adresse X₀ dans ce sous-réseau. Un système peut naturellement être connecté à plusieurs sous-réseaux. Dans ce cas, il possède autant d'adresses "IP" que de sous-réseaux.

Bien que l'invention s'applique à toutes sortes d'applications ou de services existants, elle s'applique plus particulièrement aux systèmes distribués faisant appel à la technologie du type "objet" et aux communications du type "client-serveur". Pour fixer les idées, dans ce qui suit, sans en limiter en quoique ce soit la portée, on se placera dans ce contexte préféré de l'invention, sauf mention contraire. En d'autres termes, cette technique particulière s'intéresse aux échanges de messages entre objets clients et objets serveurs, ces objets pouvant être répartis sur tout le système.

Comme il est bien connu, les systèmes connectés à un ou plusieurs réseaux ou sous-réseaux sont regroupés en domaines.

Dans le passé, les réseaux et systèmes étaient dissociés et chaque domaine utilisait ses propres mécanismes pour le nommage et l'adressage d'entités ainsi que pour le routage des informations dans les réseaux et systèmes.

Les mécanismes n'étaient d'ailleurs pas non plus unifiés à l'intérieur d'un même domaine réseau ou système. Une première rationalisation est apparue en ce qui concerne les réseaux, avec l'émergence d'internet.

En ce qui concerne les systèmes proprement dits, le degré de rationalisation est généralement très faible. On assiste cependant à quelques tentatives de rationalisation. A titre d'exemple, en ce qui concerne les annuaires d'adresses, on recourt à la méthode d'accès connue sous le sigle "LDAP" ("Light-weight Directory Access Protocol") et à l'architecture selon la norme "X500". En outre, des services tels que "DNS" (Domain Name Server" ou serveur de noms de domaine) commencent à être intégrés dans les systèmes d'exploitation ("OS") ou les interstitiels ("middleware"). Il demeure cependant une grande différence entre l'approche "réseau" et l'approche "système".

En résumé, le constat est donc que, dans l'art connu, les systèmes, les sous-systèmes, les services et les applications logicielles utilisent habituellement des solutions spécifiques pour le nommage, l'adressage et l'acheminement des informations. Cette situation n'est pas sans inconvénients et on va en rappeler quelques uns.

Tout d'abord, la multiplicité de solutions rend très complexe les processus de configuration des composants énumérés ci-dessus.

Les configurations sont habituellement statiques. On constate cependant, comme il a été rappelé une tendance à utiliser des répertoires de type "X500" pour les objets systèmes : les utilisateurs, les ressources, les services et les applications. Malgré tout, les objets réseaux, qui sont gérés par les serveurs de noms des domaines internet ("DNS"), restent exclus et ne sont pas intégrés aux objets systèmes.

Il s'ensuit que, lorsque un client interagit avec un serveur, des services spécifiques d'adressage et de résolution de noms sont utilisés. On peut citer par exemple les services de nommage tels que ceux connus sous la dénomination "CORBA" (définis par le consortium "Object Management Group"). Ces services mettent en oeuvre des mécanismes très différents. D'autres services sont connus, par exemple les services de nommage du "DCE" ("OSF" en environnement distribué) ou encore de "TUXEDO" (service transactionnel distribué connu en environnement "UNIX", ("TUXEDO" et "UNIX" étant des marques déposées)).

En général, des clients qui adressent une entité distante gérée par un système, service ou application invoquent un service de noms. Celui-ci requiert le nom du réseau et l'adresse réseau du système qui contient l'entité à atteindre.

Les inconvénients afférents à ces solutions sont les suivantes : une multiplicité de service de nommage, d'annuaires, de tables de correspondance entre adresses réseau et système, une complexité des processus de configuration et, surtout, le besoin pour le client (ou utilisateur) de connaître quel système (c'est-à-dire quelle machine) contient l'objet adressé, ou de façon plus générale l'entité adressée.

Les procédés selon l'art connu présentent donc de nombreux inconvénients. En outre, il est loisible d'ajouter qu'ils ne répondent pas, ou pour le moins imparfaitement, aux besoins qui se font actuellement sentir. Les besoins les plus importants sont listés ci-dessous.

En premier lieu, comme il a été rappelé, la configuration est le plus souvent statique. Or le besoin se fait sentir de tendre vers le "zéro administration", grâce à une configuration automatique et dynamique.

Un deuxième besoin concerne la mobilité. Un objet ou, de façon plus générale, une entité appartenant à un domaine "DNS" doit pouvoir migrer, c'est-à-dire sortir de son domaine, tout en restant adressable comme s'il était resté dans son domaine.

Un troisième besoin, qui vient en complément du deuxième, est que les serveurs doivent être indépendants vis-à-vis des plates-formes d'hébergement. Cette disposition permet une migration sans limitation.

Un quatrième besoin concerne la sécurité, dans le sens le plus large donné à ce concept : authentification, contrôle d'accès, intégrité et confidentialité des échanges. De façon générale, on parle du concept "DIC", pour "Disponibilité - Intégrité - Confidentialité". Ces exigences doivent être remplies de bout en bout entre, par exemple, l'objet client et l'objet serveur, c'est-à-dire une entité logicielle, et non pas seulement pendant le trajet sur le ou les réseaux, c'est-à-dire entre machines physiques.

Un cinquième besoin concerne la compatibilité entre différents protocoles internet, ou coexistence, et notamment entre la version "IPV4" généralement utilisée et la version plus récente "IPV6", cette version étant un sous-ensemble du standard "IPNG" ("internet Protocol New Generation" ou protocole internet nouvelle génération), en cours de déploiement.

Cependant, il est à remarquer qu'une adresse conforme au protocole IPV4 ne comporte que quatre octets, soit 2³² adresses théoriques, en réalité beaucoup moins du fait de la structure hiérarchique (présence notamment d'un préfixe). Des projections sur le futur ont montré que, compte tenu de la croissance prévisible du réseau internet, une pénurie réelle d'adresses devrait intervenir dans la période 2005-2011. Aussi dès 1995, des recommandations pour l'adoption d'un nouveau protocole, IPV6, ont été publiées (groupes de travaux "Internet Engineering Task Force" et "IPng"). Une adresse conforme à ce protocole IPV6 comprend seize octets, ce qui permet un espace d'adressage beaucoup plus important, même si les adresses ne sont pas effectivement toutes utilisables comme dans le cas du protocole IPV4. On a en effet calculé que cela représente 6,65 x 10²³ adresses réseau par mètre carré de la surface de la planète. On peut trouver une description plus détaillée de ce protocole dans l'ouvrage de A. Thomas : "IPng and the TCP/IP protocols", publié par "Wiley Computer Publishing", 1996 ainsi que dans les RFCs 1671 et 1726.

Le procédé selon l'invention multiplie en outre les besoins en nombre d'adresses distinctes, comme il le sera montré. Pour toutes ces raisons, il apparaît préférable de mettre en oeuvre le protocole IPV6 dans le cadre de l'invention.

En conséquence, l'invention se fixe pour but de pallier les inconvénients de l'art connu, tout en répondant aux besoins qui se font actuellement sentir et dont certains ont été rappelés, ce sans en augmenter significativement les coûts, voire en obtenant une baisse de ces coûts.

Pour ce faire, les systèmes, dans l'acceptation qui en a été donnée, sont considérés comme étant des réseaux virtuels que l'on appellera ci-après "réseau virtuel système" ou "SVN". En d'autres termes, les entités logicielles, par exemple des objets logiciels dans un mode de réalisation préféré, deviennent directement adressables à l'intérieur d'un système. Ce dernier constitue un noeud du réseau virtuel "SVN" et également un noeud du réseau "réel", c'est-à-dire le réseau internet, intranet ou extranet. Le système agit en tant que passerelle qui interconnecte les noeuds du réseau virtuel "SVN" au réseau "réel" précité.

Dans une variante préférée de l'invention, le procédé fournit également une possibilité de configuration dynamique, c'est-à-dire automatique. Pour ce faire, on fait appel au protocole "IPV6" précité. Cette dernière caractéristique offre en outre la possibilité d'atteindre certaines des exigences supplémentaires recherchées, telles que la mobilité et/ou la sécurité.

Les objets physiques et logiques, ou de façon plus générale les entités de même nature, qu'ils soient de type système ou réseau : clients, serveurs, systèmes, passerelles, routeurs, etc., sont au même niveau d'adressage. Des mécanismes communs sont utilisés pour le nommage, l'adressage, les services de résolution de nom et routage. Quand un client établit une connexion avec un serveur logiciel qui est, dans une variante de réalisation préférée, un conteneur d'objets, il n'y a plus besoin de fournir également le nom du système (c'est-à-dire de la machine et ses services) qui contient ce serveur.

L'invention a donc pour objet un procédé de communication dans un ensemble de systèmes distribués via au moins un réseau du type internet, ledit ensemble étant divisé en au moins un domaine comprenant des systèmes adressables via ledit réseau par une première série d'adresses de type internet stockées dans un annuaire de noms de domaine et chaque système étant connecté audit réseau via un module d'interface standard, des couches logicielles standards comprenant une pile d'adresses de la première série et des protocoles de communication du type internet, et hébergeant au moins une entité logicielle, caractérisé en ce que lesdites entités logicielles et lesdits systèmes sont associés chacun à une adresse de type internet d'une seconde série, en ce que chaque système est configuré en un réseau virtuel dit système, auquel sont connectés le système lui-même et lesdites entités logicielles via des modules d'interface spécifiques et des couches logicielles spécifiques comprenant une pile d'adresses de la seconde série et des protocoles de communication du type internet, et en ce que lesdites adresses et noms des systèmes et des entités logicielles connectés auxdits réseaux virtuels systèmes sont stockés dans ledit annuaire de domaine, de manière à pouvoir adresser directement l'une desdites entités logicielles hébergées dans l'un quelconque desdits systèmes.

On constate donc que le procédé selon l'invention apporte de nombreux avantages et notamment la possibilité pour un client (ou de façon plus générale pour un usager) d'adresser directement un serveur (ou plus généralement une entité logicielle), et non le système qui le contient.

L'invention sera mieux comprise et d'autres caractéristiques et avantages apparaîtront à la lecture de la description qui suit en référence aux figures annexées, parmi lesquelles :
- les figures 1a à 1c illustrent une architecture de système distribué à réseau du type internet selon l'art connu ;
- la figure 2 illustre schématiquement le procédé selon l'invention ;
- les figures 3 et 4 illustrent l'architecture d'un système conforme au procédé selon l'invention ;
- la figure 5 illustre schématiquement un processus de communication dans un système bi-protocole ;
- et la figure 6 illustre l'adaptation du procédé selon l'invention à une architecture de système en grappe.

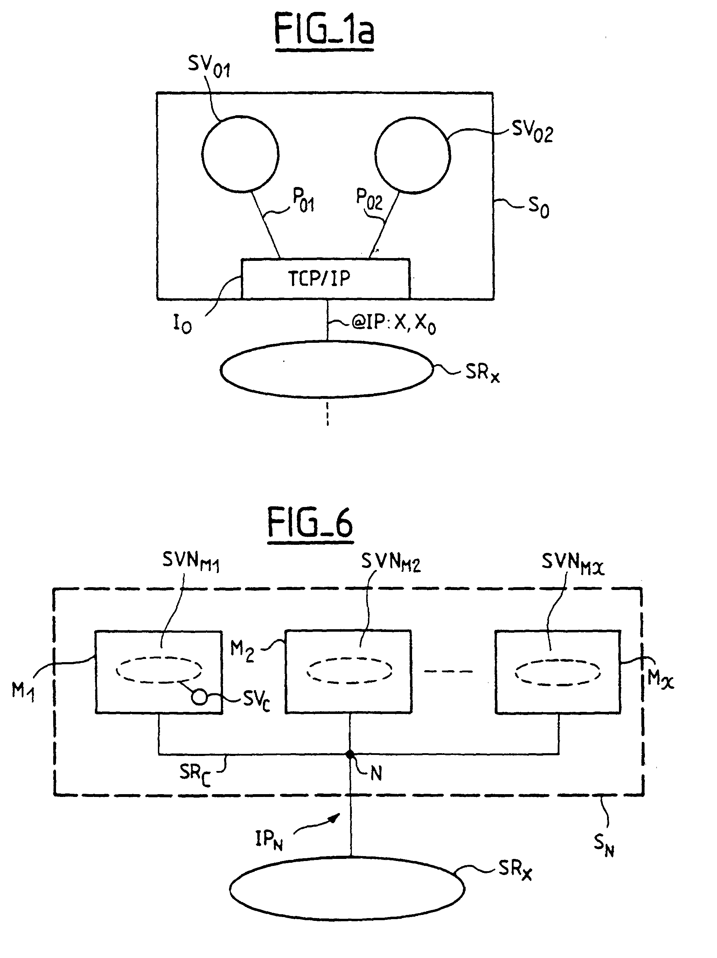

Avant de décrire le procédé selon l'invention, il est tout d'abord utile de rappeler la configuration d'un système 1 selon l'art connu et ses principales caractéristiques, par référence aux figures 1a à 1c.

En tout premier lieu, on considère un système isolé, référencé S₀, connecté à un sous-réseau SR_{X} de type internet, de préfixe X, comme illustré plus particulièrement par la figure 1a. On suppose également qu'il héberge deux serveurs, SV₀₁ et SV₀₂, c'est-à-dire deux objets logiciels, ou de façon plus générale deux entités logicielles. Le système S₀ possède une adresse "IP" sur le sous-réseau SR_{X} donnée par la relation @IP:X,X₀.

Chaque serveur, SV₀₁ ou SV₀₂, est identifié par une adresse "IP" et un numéro de port, P₀₁ ou P₀₂, qui sont :
- pour le serveur SV₀₁ : X, X₀, P₀₁ ;
- pour le serveur SV₀₂ : X, X₀, P₀₂.

Le système S₀ est connecté au sous-réseau SR_{X} via une interface I₀ qui sera détaillé ci-après et qui comprend diverses couches logiques : piles d'adresses "IP", protocoles de communication. Seule cette interface connaît les numéros de port, P₀₁ et P₀₂. Il est donc aisé de constater que, selon l'art connu, si l'on désire adresser l'un des serveurs, SV₀₁ ou SV₀₂, de l'extérieur du système S₀, il est absolument nécessaire de connaître l'adresse "IP" de ce système, c'est-à-dire l'adresse @IP:X,X₀.

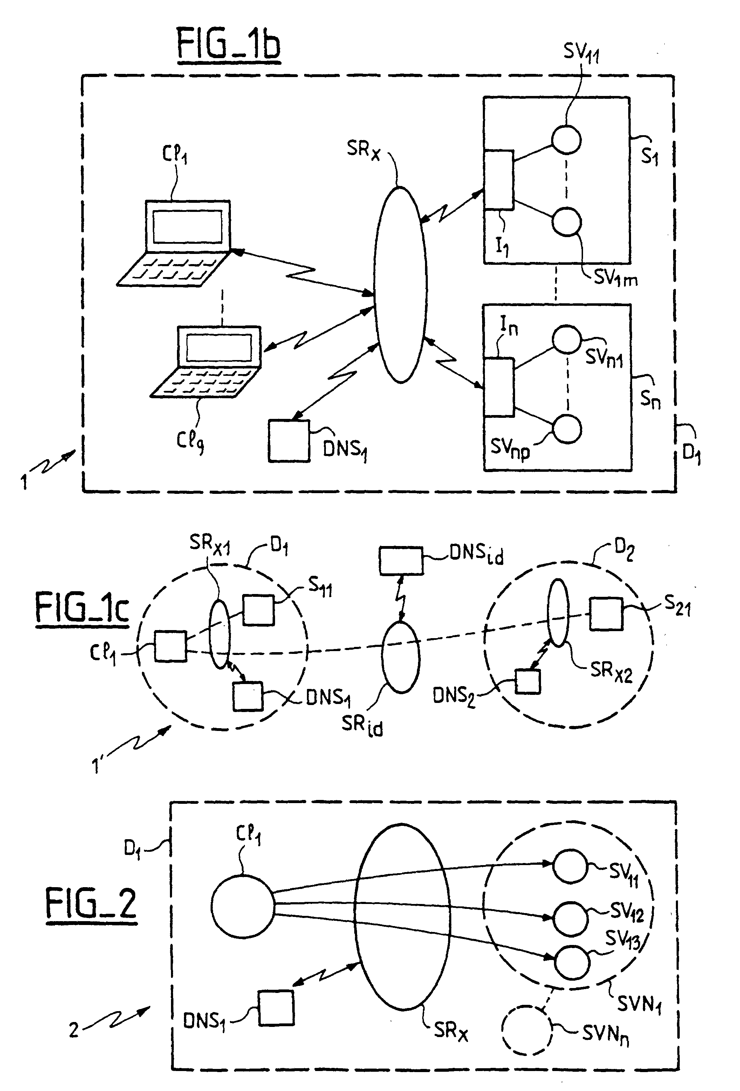

La figure 1b illustre, de façon plus générale, un ensemble 1 de systèmes connectés via un sous-réseau SR_{X}, toujours selon une configuration conforme à l'art connu.

Sur la figure 1b, on suppose que l'ensemble 1 ne constitue qu'un seul et unique domaine D₁. On suppose également que le système 1 comprend *q* clients; référencés Cl₁ à Cl_{q}, et *n* machines, c'est-à-dire des systèmes référencées S₁ à S_{*n*}. Chaque système comprend un nombre déterminé de serveurs, par exemple *m* serveurs dans le système S₁, référencés SV₁₁ à SV_{1*m*}, et *p* serveurs dans le système S_{*n*}, référencés SVₙ₁ à SV_{n*p*}. Chaque système est doté d'une ou plusieurs adresses dites "IP".

Les échanges d'informations, c'est-à-dire de messages, s'effectuent sous le protocole "TCP-IP" entre les clients, Cl₁ à Cl_{*q*}, et les systèmes, S₁ à S_{*n*}, via le sous-réseau de type internet SR_{X}. Le domaine D₁ comprend également un serveur de noms de domaine DNS₁ stockant un annuaire d'adresses "IP". Enfin, chaque système, S₁ à S_{*n*}, comprend une interface, I₁ à I_{*n*}, avec le sous-réseau SR_{X}, stockant une pile d'adresses "IP" associées à chaque système et une table de routage permettant de renvoyer un message reçu vers un autre système via le sous-réseau SR_{X}.

À l'intérieur d'un système, par exemple le système S₁, un serveur particulier, par exemple le serveur SV₁₁, est identifié par un numéro de port, comme il a été rappelé en regard de la figure 1a.

Lorsque un client, par exemple Cl₁, veut adresser un serveur particulier, par exemple le serveur SV₁₁ précité, il est nécessaire qu'il connaisse le nom du système qui l'héberge, en l'occurrence le système S₁. L'annuaire présent dans le serveur DNS₁ effectue une corrélation entre le nom et l'adresse "IP" du système S₁ contenant le serveur SV₁₁. Le client Cl₁ adresse alors le système S₁ à l'aide de l'adresse "IP" qu'il reçoit du serveur de noms de domaine DNS₁.

Comme le montre la figure 1c, le schéma d'adressage est très similaire à celui qui vient d'être décrit lorsque l'ensemble de systèmes, référencé 1', comprend plusieurs domaines, par exemple deux domaines, D₁ et D₂. Chaque domaine, D₁ et D₂, comprend un serveur d'adresses de domaine qui lui est propre, DNS₁ et DNS₂ et un réseau ou sous-réseau, SR_{X1} et SR_{X2}, respectivement. Les interconnexions entre sous-réseaux s'effectuent via un réseau ou sous-réseau interdomaine SR_{*id*} et on prévoit un serveur, également interdomaine, DNS_{*id*}. Si le client Cl₁, dans le domaine D₁, désire adresser, non plus un serveur (non représenté) compris dans le système S₁₁ du domaine D₁, mais un serveur (non représenté) compris dans le système S₂₁ du domaine D₂, l'adresse du domaine de destination D₂ lui sera fournie par le serveur DNS_{*id*}, puis, à l'intérieur du domaine D₂, l'adresse du système de destination S₂₁, par le serveur DNS₂. Ici encore, il est nécessaire de connaître le nom du système hébergeant le serveur adressé, en l'occurrence le nom du système S₂₁.

Avant de décrire le procédé selon l'invention, il est également utile de rappeler succinctement les mécanismes mis en oeuvre, d'une part dans les serveurs de domaine, par exemple DNS₁ ou DNS₂, d'autre part en ce qui concerne le routage.

La fonction principale d'un serveur de noms de domaine, ou "DNS", est d'établir une correspondance entre des noms symboliques attribués à des systèmes (et de façon plus générale à des entités, comme détaillé ci-après dans le cadre du procédé selon l'invention) et des adresses "IP". Un serveur de noms de domaine fonctionne de manière hiérarchique. Il est constitué de domaines, par exemple D₁ ou D₂ (figure 1c), qui permettent de répartir les noms dans des catégories fonctionnelles, par exemple associées au commerce, à un pays, etc. Cette dernière caractéristique, au "sommet" de la hiérarchie précitée (domaines de premier niveau), est représentée par un suffixe tel que "com", "edu", "gov", "int", "mil", "net", "arg", "fr", etc., séparé du reste du nom par un point. Le reste du nom de domaine peut être, à son tour, divisé en noms de domaines partiels séparés par des points (niveaux inférieurs). A titre d'exemple, un service commercial donné pourrait être représenté par un nom symbolique tel que "servicel.xxx.com", dans lequel "xxx", représenterait le nom d'une société et "servicel", un service particulier. Une recherche sur ce nom permet de se focaliser sur les serveurs de noms de domaines "DNS" affectés à ".com". Si on recherche un nom du type précité, c'est le serveur de noms de domaine "DNS" affecté à ".xxx", qui a comme serveur supérieur ".com", qui traitera la demande. Ceci correspond au schéma implicitement décrit en regard de la figure 1c.

De façon plus précise, et à titre d'exemple, dans le serveur de noms de domaine DNS₁ du domaine D₁ qui contient le système S₁₁, on trouve une entrée du type "sys11 -> X₁,X₁₁" ; avec X₁ le préfixe du sous-réseau SR_{X1}, et X₁₁ l'adresse du système S₁₁ dans le sous-réseau SR_{X1}·

A l'intérieur d'un système, une opération initiale de configuration permet de lui attribuer une adresse en faisant appel à une commande spécifique. Par exemple, en environnement "UNIX" (marque déposée), la commande "IFCONFIG" permet de configurer les interfaces réseau, par exemple I₁ à I_{*n*} (figure 1b), d'une pile de protocoles internet. Cette action de configuration crée une entrée dans une table connue sous le sigle "IFNET". Cette table contient une description de l'interface, l'adresse "IP", des informations d'état et des pointeurs vers les pilotes ("drivers") associés à l'interface. Après cette opération, le système S₁₁ (dans l'exemple) a pour adresse "IP" l'adresse X,X₁₁·

Si on considère de nouveau la figure 1a, le routage permet l'accès à un autre sous-réseau que le sous-réseau SR_{X}, par exemple un réseau SR_{Z} (non représenté), Z étant le préfixe de ce réseau. Cet accès s'effectue par l'intermédiaire du système S₀ qui constitue une passerelle X-Z. Le système S₁₁ est un terminal et le niveau "IP" de routage peut être désactivé.

A l'intérieur d'un réseau internet, les routeurs disposent de bases de données qui permettent d'aiguiller les paquets de données d'information. De nombreux protocoles de routage sont connus, tels "RIP" ("Routing Information protocol") ou "OSFP" ("Open Shortest Path First"). Ces protocoles permettent aux routeurs de s'échanger les informations de routage. Par exemple, si le protocole "RIP" est utilisé, un système donné communique l'adresse de ses préfixes (c'est-à-dire les adresses des sous-réseaux auquel il est connecté) à tous ses voisins. Ainsi, de proche en proche, s'établissent des routes qui vont permettre d'acheminer les paquets.

Il est enfin nécessaire de déclarer des pilotes ("drivers") et plus précisément deux types de pilotes : un pilote d'interface de réseau, dit "nid" (pour "network interface driver"), et un pilote qui correspond à la carte de circuits électroniques d'interface au réseau, dit "ndd" (pour "network device driver").

On va maintenant décrire le procédé conforme à l'invention.

La figure 2 illustre très schématiquement le procédé d'adressage des serveurs selon l'invention. On a supposé sur la figure 2, dans un but de simplification, que l'ensemble de systèmes, ici référencé 2, était compris dans un seul domaine D₁, associé à un serveur de noms de domaine DNS₁ et un seul client Cl₁.

Selon une première caractéristique importante de l'invention, chaque système "réel" (S₁ à S_{*n*} de la figure 1b) est assimilé à un réseau virtuel, SVN₁ à SVN_{*n*}, représentés en traits pointillés sur la figure 2. Ces réseaux seront appelés "réseaux virtuels systèmes" dans ce qui suit.

Selon une deuxième caractéristique importante de l'invention, les serveurs, par exemple SV₁₁ à SV₁₃ dans le réseau virtuel système SVN₁, sont associés chacun à une adresse "IP" individuelle. Il s'ensuit que chaque serveur, par exemple le serveur SV₁₁, c'est-à-dire un objet ou une entité logicielle, est directement adressable par un client, par exemple le client Cl₁, et de façon plus générale un client Cl_{*x*} si le système 2 comporte plusieurs clients (*x* étant arbitraire). En d'autres termes, un client n'a plus besoin de connaître le nom du système hébergeant le serveur recherché. L'annuaire du serveur DNS₁ stocke toutes les adresses "IP" des serveurs, par exemple des serveurs SV₁₁ à SV₁₃ du réseau virtuel système SVN₁.

Il doit être noté que, dans un système multi-domaines, tous les serveurs d'un réseau virtuel système appartiennent à un même domaine.

Selon une troisième caractéristique importante de l'invention, les systèmes "réels" ou machines (S₁ à S_{*n*} de la figure 1b) qui constituent, dans une configuration selon l'art connu, des systèmes terminaux deviennent des systèmes intermédiaires. Ils constituent des noeuds des réseaux virtuels, SVN₁ à SVN_{*n*}, et également des noeuds du réseau "réel", c'est-à-dire le sous-réseau internet ou intranet SR_{X}. Les systèmes agissent en tant que passerelles qui interconnectent les noeuds des réseaux virtuels, SVN₁ à SVN_{*n*}, au sous-réseau SR_{X}. Chaque système est également doté d'une adresse "IP".

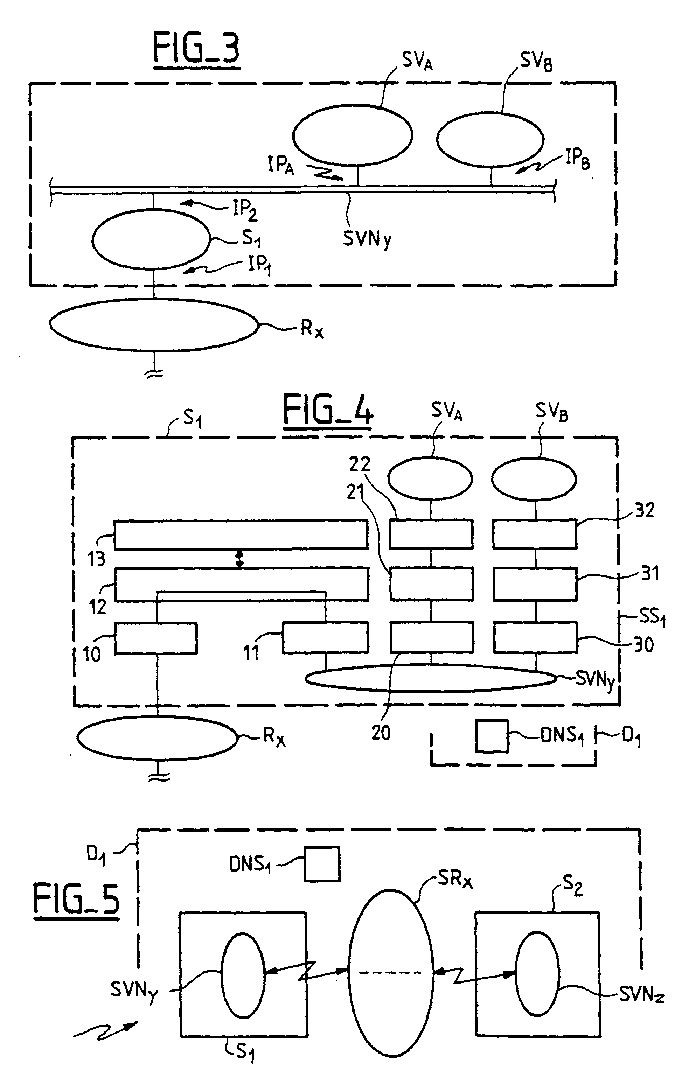

On peut donc représenter un réseau virtuel système SVN₁ associé à un système S₁ de la façon illustrée par la figure 3. On constate que le système S₁ constitue bien un noeud pour le réseau R_{X} et qu'il est associé, vu de ce réseau (c'est-à-dire de l'extérieur), à une première adresse : IP₁, avec @IP₁:X,X₁, X étant le préfixe attribué au sous-réseau SR_{X} et X₁ l'adresse de S₁ dans le sous-réseau SR_{X}.

On suppose que le réseau virtuel système SVN_{Y} est constitué des deux serveurs référencés SV_{A} et SV_{B} qu'il héberge et du système S₁ proprement dit. Vu du réseau virtuel système SVN₁, le système S₁ est associé à une seconde adresse : IP₂, avec @IP₂:Y,Y₁, Y étant le préfixe attribué au réseau virtuel système SVN_{Y} et Y₁ l'adresse de S₁ dans le réseau SVN_{Y}.

De même, les serveurs S_{A} et S_{B} sont associés à deux adresses, IP_{A} et IP_{B}, respectivement, avec : @IP_{A}:Y,Y_{A}, et @IP₂:Y,Y_{B}, Y_{A} et Y_{B} étant les adresses de SV_{A} et SV_{B}, respectivement, dans le réseau SVN_{Y}.

La figure 4 illustre de façon plus détaillée l'architecture du système S₁ selon l'invention.

Le réseau "réel" R_{X} communique avec le réseau virtuel système SVN_{Y} via un module d'interface réseau classique 10, connu sous le sigle "IFNET" (commun à l'art connu), une pile d'adresses "IP" système 12, également classique, et un module d'interface 11, spécifique au réseau virtuel système, que l'on appellera par analogie "IFSVN". En effet, ce dernier joue un rôle similaire à l'interface " IFNET" 10. Le système comprend également une couche de protocoles 13 classique "TCP/UDP".

De même, bien que les serveurs SV_{A} et SV_{B} soient situés physiquement à l'intérieur du système S₁. on prévoit, pour chacun, des modules d'interface spécifiques "IFSVN", 20 et 30 respectivement, des piles d'adresses "IP", 21 et 31 respectivement, ainsi que des couches de protocoles "TCP/UDP", 22 et 32 respectivement. Les serveurs SV_{A} et SV_{B} communiquent donc avec le réseau virtuel système SVN_{Y} au travers de ces deux couches et du module d'interface spécifiques.

En d'autres termes, les modules d'interface spécifiques, 11, 20 et 30, permettent un comportement standard du niveau "IP" (couche 12) du système S₁ qui contient le réseau virtuel système SVN_{Y}. Ils permettent le routage des paquets d'informations à l'intérieur du système S₁ vers les serveurs logiciels SV_{A} et SV_{B}, qui se comportent désormais comme des systèmes virtuels terminaux du réseau virtuel système SVN_{Y}.

Selon l'invention, l'allocation d'adresses "IP", qu'elles concernent les systèmes proprement dits ou plus spécifiquement les serveurs logiciels, s'effectuent de façon similaire, en soi, aux méthodes de l'art connu.

Pour un serveur donné, par exemple SV_{A}, c'est-à-dire concernant un objet exécuté dans un système, par exemple le système S₁ compris dans le domaine D₁, on met à jour l'annuaire du serveur DNS₁. Cette mise à jour peut s'effectuer de façon manuelle ou automatique, comme il sera explicité ci-après.

De façon plus précise, un objet ou une entité utilise deux fonctions, connues en soi : l'allocation d'une adresse globale et le relâchement d'adresse.

Comme il a été indiqué, l'allocation d'une adresse s'effectue de façon similaire à l'art connu, toutefois avec une différence majeure : les réseaux virtuels systèmes sont référencés dans le serveur de nom de domaine avec les entités qui leur sont connectés, dont les serveurs logiciels.

Si on reprend l'exemple de la figure 4, le serveur de noms de domaine DNS₁ stocke les entrées suivantes :
a/ sys1 → X,X₁ ;
b/ sys2 -> Y,Y₁ ;
c/ serva -> Y,Y_{A} ;
d/ servb -> Y,Y_{B} ;
les entrées a/ et b/ étant relatives aux adresses IP₁ et IP₂, respectivement, et les entrées c/ et d/, relatives aux adresses IP_{A} et IP_{B}, respectivement. Il est à noter que sys1, sys2; serva et servb sont des noms symboliques.

Un serveur ou service est donc bien directement adressable. A titre d'exemple, si une société "xxx" a pour serveur de noms de domaine DNS₁ et que son serveur de noms de domaine supérieur est le serveur de "com", le service "serva" devient adressable sur le réseau internet par le nom "serva.xxx.com". N'importe quel objet client, ou de façon plus générale n'importe quel usager, peut interroger son serveur de noms de domaine pour demander l'adresse "IP" correspondant à ce nom. Le domaine du système qui a émis la requête, compte tenu de la structuration du nom (c'est-à-dire une notation de type pointé) fait remonter à son serveur de noms de domaine supérieur la demande s'il ne peut la résoudre lui-même, et ainsi de suite jusqu'à ce qu'un serveur de domaine particulier soit capable d'adresser la requête au serveur de noms de domaine qui va résoudre la correspondance "nom symbolique - adresse IP demandée", par exemple le serveur DSN₁.

La fonction relâchement d'adresse libère une adresse précédemment allouée à un objet.

En ce qui concerne le routage, le système S₁ n'est plus un terminal, mais devient une passerelle. Le niveau "IP" de routage est obligatoirement activé.

Pour qu'il y ait un routage correct entre l'ensemble des systèmes d'un réseau, quelle qu'en soit sa nature, il est également nécessaire que l'on procède à des opérations de résolution de noms. Cette fonction est la plus importantes de celles assignées au protocole "ICMP" (pour "Internet Control Message Protocol"). Elle consiste en la découverte, pour un système donné, par exemple S₁, des systèmes voisins qui partagent les liens auxquels il est connecté. Cette opération prend place la première fois qu'un datagramme est envoyé sur le réseau SR_{X} vers un voisin. En effet, à cet instant, le système S₁, qui veut envoyer un datagramme à l'un de ses voisins connaît l'adresse "IP" du destinataire, mais pas son adresse réseau (par exemple une adresse "Ethernet" (marque déposée), s'il s'agit d'un réseau de ce type). De façon pratique, il s'agit pour le système S₁ de devoir construire une table qui établit la correspondance entre des adresses "IP" et des adresses réseau. Pour ce faire sur les réseaux locaux, par exemple les réseau du type "Ethernet" précité, le protocole IPV4 utilise un protocole connu sous le vocable "ARP" (pour "Adress Résolution Protocol") et le protocole "IPV6 utilise un protocole connu sous le vocable "NDP" (pour "Neighbor Discovery Protocol"). A titre d'exemple, si le protocole "NDP" est mis en oeuvre , le système S₁ peut connaître les adresses réseau des autres systèmes qui partagent ses liens. Un système donné utilise une adresse à diffusion pour demander à ses voisins, en fonction de leur adresse "IP", leur adresse réseau.

Dans le cas des réseaux virtuels systèmes conforme à l'invention, par exemple SVN_{Y}, les différents utilisateurs sont le système S₁ lui-même et les serveurs hébergés par ce système, SV_{A} et SV_{B}. Ils sont situés au même endroit et la découverte de ses voisins décrite ci-dessus est inutile. Les protocoles "ARP" ou "NDP" ne sont pas invoqués.

L'opération initiale de configuration doit, dans le cas de l'invention, être sous-divisée. A titre d'exemple, dans l'environnement "UNIX" précité, on utilise également la commande "IFCONFIG". On doit cependant configurer l'interface vers le sous-réseau SR_{X}, l'interface vers le réseau virtuel système SVNY, et configurer en outre une adresse de type alias par serveur connecté à ce réseau. Dans l'exemple décrit, on doit configurer deux adresses : @IP_{A}:Y,Y_{A} et @IP_{B}:Y,Y_{B}.

Comme dans le cas de l'art connu, il est nécessaire de déclarer des pilotes ("drivers") et plus précisément deux types de pilotes : un pilote d'interface de réseau, dit "nid" (pour "network interface driver"), et un pilote qui correspond à la carte de circuits électronique d'interface au réseau, dit "ndd" (pour "network device driver"). De même, il est nécessaire de déclarer un pilote d'interface de réseau virtuel système, par exemple SVN_{Y}. Ce dernier pilote est réalisé (développement logiciel) conformément aux règles d'écriture d'un pilote d'interface "nid" classique. Il est à noter que l'équivalent du pilote "ndd" n'est plus nécessaire. En effet, les couches "TCP/IP" comprennent obligatoirement un pilote dit "loopback" qui joue le rôle, pour le réseau virtuel système SVNY, du pilote "ndd" pour le sous-réseau SR_{X}.

On va maintenant décrire de façon plus détaillée comment entrent et sortent des paquets de données dans et hors du système S₁.

Si un paquet de données contenant dans son adresse "IP" les indications "Y,Y_{A}" arrive sur le système S₁, ce dernier consulte la table des adresses locales. Il retrouve "Y,Y_{A}" dans la table "IFNET" 10 (entrée dite "alias") et considère que le paquet est arrivé à destination et le délivre à l'application en attente, c'est-à-dire le serveur SV_{A}, via le réseau virtuel SVN_{Y}.

Si un paquet de données est émis par un serveur, par exemple le serveur SV_{B}, vers un serveur SV_{*n*} situé à l'extérieur du réseau virtuel système SVN_{Y}, le système S₁ agit comme "serveur de routage", ou passerelle, et aiguille ce paquet sur l'interface réseau qui correspond au sous-réseau SR_{X}.

Si, par contre, un paquet de données est émis par un serveur, par exemple le serveur SV_{B}, vers un serveur situé à l'intérieur du réseau virtuel système SVN_{Y}, par exemple le serveur SV_{A}, le système S₁ agit également comme routeur. Il détecte que l'adresse de destination correspond à une des adresses locales. Il effectue un rebouclage standard du type connu sous le vocable "loopback" (obligatoire dans toute pile de protocoles TCP/IP", comme il a été indiqué ci-dessus) et transmet le paquet au serveur SV_{A}. Le paquet de données ne sort donc pas du système S₁. En particulier, il ne transite pas par le sous-réseau SR_{X}.

Le procédé selon l'invention présente de nombreux avantages et possibilités.

En premier lieu, il est à remarquer que le procédé selon l'invention reste tout à fait compatible avec le protocole internet le plus couramment utilisé à ce jour, c'est-à-dire le protocole IPV4, seul ou en combinaison avec le protocole nouveau IPV6.

La figure 5 illustre, à titre d'exemple, le processus de communication entre deux réseaux virtuels systèmes, SVN_{Y} et SVN_{Z}, compris dans deux systèmes, S₁ et S₂ respectivement. On suppose que les deux systèmes ont à la fois des adresses IPV4 et IPV6. On suppose également que le réseau SR_{X} qui connecte les deux système, S₁ et S₂, utilise le protocole IPV4. Les mécanismes standards d'encapsulation mis en oeuvre par le protocole IPV6 permettent aux utilisateurs des systèmes S₁ et S₂ d'interopérer en utilisant des paquets IPV6 qui sont encapsulés à l'intérieur de paquets IPV4 quand ils transitent sur des réseaux IPV4, comme c'est le cas pour le réseau Rx.

Les deux protocoles peuvent donc coexister et le protocole IPV4, seul, reste théoriquement utilisable dans le cadre de l'invention. Cependant, il a été signalé qu'une pénurie d'adresses était prévisible. Compte-tenu en outre que les serveurs sont aussi pourvus d'une adresse "IP", selon l'une des caractéristiques les plus importantes de l'invention, ce qui contribue à multiplier les besoins en adresses, il apparaît préférable de mettre en oeuvre le protocole IPV6 dans le cadre de l'invention.

En deuxième lieu, en combinaison avec le nouveau protocole internet IPV6, le procédé selon l'invention permet une configuration dynamique, la résolution dynamique des noms étant réalisée par le protocole dit "NDP" (pour "Neighbor Discovery Protocol"). L'allocation dynamique d'adresses "IP" est suivie d'une mise à jour des bases de données du service d'annuaire, rendant le propriétaire de l'adresse "IP" capable de communiquer avec un réseau de type internet, intranet ou extranet.

On va détailler ci-dessous, à titre d'exemple, un processus, en trois phases, rendant un objet ou une entité dynamiquement adressable partout, à l'intérieur d'un domaine donné.

Pendant la phase 1, l'objet est exécuté sur un premier système, par exemple le système S₁ (figure 5), et les étapes suivantes sont réalisées :
- allocation d'une adresse IP à l'objet ;
- l'annuaire du domaine, par exemple DNS₁ de D₁, qui contient le système S₁ est mis à jour ;
- l'objet peut alors établir des connexions avec d'autres objets.

Pendant la phase 2, l'objet est transféré dans un autre système, par exemple le système S₂ (figure 5), et les étapes suivantes sont réalisées :
- l'objet ferme ses connexions actives ;
- l'objet relâche son adresse "IP" ;
- l'annuaire DNS₁ de D₁, est mis à jour ;
- l'objet est transféré sur le système S₂ en faisant appel à un protocole de transfert de fichier.

Pendant la phase 3, l'objet s'exécute sur le système S2 et les étapes suivantes sont réalisées :
- allocation d'une nouvelle adresse IP à l'objet ;
- mise à jour de l'annuaire DNS₁ de D₁, ;
- l'objet peut alors établir ou accepter de nouveau des connexions.

En troisième lieu, le procédé selon l'invention, toujours en combinaison avec le protocole IPV6, permet également la mobilité d'un objet ou d'une entité. En effet, le protocole IPV6 offre possibilité, pour cet objet, de sortir d'un domaine, tout en restant adressable comme s'il était toujours dans le domaine d'origine.

En quatrième lieu, le procédé selon l'invention permet à des objets ou entités logiciels de bénéficier pleinement des techniques de sécurité définies au niveau internet. Ces techniques sont réalisées par mise en oeuvre de "gardes-barrières" (ou "firewall" selon la terminologie anglo-saxonne courante) et du protocole "IPSEC". Elles fournissent des services de contrôle d'accès (filtrage d'adresses), d'authentification, d'intégrité (signatures) et de confidentialité (en faisant appel à des algorithmes de chiffrage). Or, dans l'art connu, le lien internet ne relie que les systèmes entre eux. En d'autres termes, le lien et le protocole "IPSEC" ne s'étendent pas jusqu'aux applications logicielles, c'est-à-dire jusqu'aux serveurs. Il est donc d'usage de prévoir, à l'intérieur des systèmes des couches logicielles supplémentaires de sécurité, bien connues sous le sigle "SSL" (ou "Secure Socket Layer", selon la terminologie anglo-saxonne), ce qui rend plus complexe les liaisons, d'autant plus que chaque objet ou entité a généralement des besoins en sécurité qui lui sont spécifiques.

Le procédé selon l'invention simplifie, par le concept de nouvelle génération de garde-barrière ("firewall) associée à chaque client et à chaque serveur dont on veut assurer la sécurité, la sécurité des systèmes, puisque les liens s'étendent jusqu'aux objets ou entités logicielles. En effet, selon une de ses caractéristiques principales, ces objets logiciels ont leur propre adresse "IP" et sont donc directement adressables. Outre qu'il apporte une plus grande simplicité, le procédé permet aussi de diminuer le coût des solutions. Les techniques de sécurité équivalentes, réalisées dans l'art connu dans les services interstitiels ("middleware", selon la terminologie anglo-saxonne), illustrées par exemple par la couche "SSL" précitée, deviennent inutiles.

Jusqu'à présent, on a considéré que chaque système était autonome. Le procédé selon l'invention peut également s'appliquer avantageusement aux systèmes dits en grappes (ou "clusters", selon la terminologie anglo-saxonne). En effet, le but principal visé par une telle architecture est d'apparaître, vu de l'extérieur, comme un système ou une machine unique. Le procédé selon l'invention permet d'atteindre ce but.

La figure 6 illustre une telle architecture. Les machines M₁ à M_{*x*} en grappe, avec *x* nombre maximum de machines, sont interconnectées par un réseau local SR_{C}. Sur ce réseau local, se trouve un équipement de réseau : le noeud N doté d'une adresse IP, IP_{N} sur le réseau SR_{X}. Chaque machine constitue, avec les serveurs qu'elle héberge à un instant donné, un réseau virtuel SVN_{M1} à SVN_{M*x*}, ces réseaux étant connectés selon le procédé de l'invention au réseau SR_{X}, au réseau local SR_{C} par l'intermédiaire de chaque système et au réseau SR_{X} via le noeud N.

Le mécanisme standard "IP" organise le routage d'un paquet adressant l'objet d'un réseau virtuel système vers le noeud de la grappe qui le contient, par exemple le serveur SV_{C} sur le réseau virtuel système SVN_{M1} dans la machine M1. Pour un client distant extérieur à la grappe, l'objet adressé peut s'exécuter sur n'importe quel noeud de la grappe, de manière transparente pour ce client. Il n'est en effet plus besoin d'adresser une machine particulière parmi les *x* machines. Il suffit d'adresser l'objet ou entité voulu, par exemple SV_{C}.

Ce mode de fonctionnement autorise une disponibilité élevée. Si un objet ou une entité logicielle d'un réseau virtuel système devient indisponible du fait d'une défaillance matérielle ou logicielle du système qui l'héberge, l'objet peut être redémarré sur un autre noeud et les mécanismes standards de résolution d'adresse vont permettre de le reconfigurer dynamiquement. Pour ce faire, il suffit de mettre en oeuvre le procédé selon l'invention, en combinaison avec le protocole IPV6.

Dans un autre mode de fonctionnement, l'objet ou entité peut être dupliqué dans deux ou plusieurs des machines constituant la grappe. Cette redondance peut être prévue pour les mêmes raisons que précédemment (défaillance ou dysfonctionnement) ou pour assurer la disponibilité, par re-routage, malgré une surcharge d'une ou plusieurs machines (travail en parallèle).

A la lecture de ce qui précède, on constate aisément que l'invention atteint bien les buts qu'elle s'est fixés.

Les avantages présentés par l'invention sont nombreux. On peut, sans les détailler de nouveau, les résumer comme suit :
- rationalisation de l'adressage, des services de nom et des protocoles associés, tant pour les objets ou entités réseaux que pour les objets ou entités des systèmes (logiciels ou applications) ;
- indépendance des serveurs vis-à-vis des systèmes (machines) ;
- configuration dynamique, ce qui permet de tendre vers le "zéro-administration" ;
- mobilité des objets ou entités logiciels ;
- services de sécurité réseau appliqués aux objets ou entités logiciels ;
- baisse des coûts des solutions par réutilisation de services réseaux existants par des services interstitiels et applications ;
- et compatibilité avec des architectures de type internet actuelles, ainsi que l'utilisation de standards.

Il doit être clair cependant que l'invention n'est pas limitée aux seuls exemples de réalisations explicitement décrits, notamment en relation avec les figures 2 à 5.

## Revendications

1. Procédé de communication dans un ensemble (2) de systèmes distribués (S₁) via au moins un réseau du type internet (SR_{X}), ledit ensemble (2) étant divisé en au moins un domaine (D₁) comprenant des systèmes adressables (S₁) via ledit réseau (SR_{X}) par une première série d'adresses de type internet (IP₁) stockées dans un annuaire de noms de domaine (DNS₁) et chaque système (S₁) étant connecté audit réseau via un module d'interface standard (10), des couches logicielles standards (12, 13) comprenant une pile d'adresses de la première série et des protocoles de communication du type internet, et hébergeant au moins une entité logicielle (SV_{A}, SV_{B}), **caractérisé en ce que** lesdites entités logicielles (SV_{A}, SV_{B}) et lesdits systèmes (S₁) sont dotés chacun d'une adresse de type internet d'une seconde série (IP₂, IP_{A}, IP_{B}), **en ce que** chaque système est configuré en un réseau virtuel (SVN_{Y}) dit système, auquel sont connectés le système lui-même (S₁) et lesdites entités logicielles (SV_{A}, SV_{B}) via des modules d'interface spécifiques (11, 20, 30) et des couches logicielles spécifiques (21-22, 30-31) comprenant une pile d'adresses de la seconde série et des protocoles de communication du type internet, et **en ce que** lesdites adresses (IP₁, IP₂, IP_{A}, IP_{B}) et noms des systèmes (S₁) et des entités logicielles (SR_{A}, SR_{B}) connectés auxdits réseaux virtuels systèmes (SVN_{Y}) sont stockés dans ledit annuaire de domaine (DNS₁), de manière à pouvoir adresser directement l'une desdites entités logicielles (SV_{A}, SV_{B}) hébergées dans l'un quelconque desdits systèmes.

2. Procédé selon la revendication 1, **caractérisé en ce qu'**il comprend des étapes d'allocation d'adresse comprenant un préfixe et un identifiant à chacune desdites entités logicielles (SV_{A}, SV_{B}), de mise à jour dudit annuaire de noms de domaine (DNS₁) pour enregistrer le nom et l'adresse de ces entités logicielles (SV_{A}, SV_{B}), et de relâchement d'adresse, de manière à libérer une adresse précédemment allouée à une entité logicielle déterminée (SV_{A}, SV_{B}).

3. Procédé selon la revendication 2, **caractérisé en ce que** lesdites adresses sont établies conformément au protocole internet.

4. Procédé selon la revendication 3, **caractérisé en ce que** ladite allocation d'adresse est dynamique et **en ce que** l'allocation dynamique d'adresse comprend au moins les phases et étapes suivantes :
- une phase d'exécution de ladite entité logicielle (SV_{A}, SV_{B}) dans un premier système (S₁) comprenant des étapes d'allocation d'une adresse conforme au protocole internet, de mise à jour dudit annuaire de noms de domaine (DSN₁) et d'établissement et/ou d'acceptation de connexions via ledit réseau de type internet (R_{X}) ;
- une phase de transfert de ladite entité logicielle (SV_{A}, SV_{B}) dudit premier système (S₁) dans un second système (S₂) comprenant des étapes de fermeture des connexions actives, de relâchement de l'adresse de type internet de l'entité logicielle (SV_{A}, SV_{B}), et de mise à jour dudit annuaire de noms de domaine (DNS₁) ;
- et une phase d'exécution de cette entité logicielle (SV_{A}, SV_{B}) sur ledit second système (S₂) comprenant des étapes d'allocation d'une nouvelle adresse conforme au protocole internet IPV6, de mise à jour dudit annuaire de noms de domaine (DNS₁) et d'établissement et/ou d'acceptation de nouvelles connexions via ledit réseau de type internet (R_{X}).

5. Procédé selon l'une quelconque des revendications précédentes, **caractérisé en ce que** lesdites communications entre lesdites entités logicielles (SV_{A}, SV_{B}) s'effectuent en mode client-serveur.

6. Procédé selon la revendication 5, **caractérisé en ce que** lesdites entités logicielles (SV_{A}, SV_{B}) sont des objets clients ou des objets serveurs.

7. Procédé selon l'une quelconque des revendications précédentes, **caractérisé en ce que**, au moins l'un desdits systèmes (S_{N}) étant constitué d'une grappe d'au moins deux machines (M₁ à M_{*x*}), connectées à un même noeud (N) et formant chacune un desdits réseaux virtuels systèmes (SVN_{M1} à SVN_{M*x*}), ledit noeud est associé à une adresse (IP_{N}) de type internet de la dite première série, de manière à pouvoir adresser une entité logicielle (SV_{C}) hébergée par l'une quelconque (M₁) desdites machines à l'aide d'une adresse de type internet de ladite seconde série.

8. Procédé selon la revendication 7, **caractérisé en ce qu'**au moins l'une desdites entités logicielles est dupliquée dans au moins deux des machines de ladite grappe (S_{N}).

9. Procédé selon l'une quelconque des revendications précédentes, **caractérisé en ce que** l'on associe des garde-barrières à une paire desdites entités logicielles (SV_{A}, SV_{B}) mises en communication par un lien internet, via ledit réseau de type internet (SR_{X}), de manière à sécuriser de bout en bout ledit lien.

## Patentansprüche

1. Verfahren zur Kommunikation in einer Gesamtheit (2) von verteilten Systemen (S₁) über wenigstens ein Netz (SR_{X}) des Typs Intemet, wobei die Gesamtheit (2) in wenigstens eine Domäne (D₁) unterteilt ist, die Systeme (S₁) umfasst, die über das Netz (SR_{X}) über eine erste Serie von Adressen (IP₁) des Typs Internet, die in einem Domänennamenverzeichnis (DNS₁) gespeichert sind, adressierbar sind, und wobei jedes System (S₁) mit dem Netz über ein Standard-Schnittstellenmodul (10) verbunden ist, wobei Standard-Softwareschichten (12, 13) einen Stapel von Adressen der ersten Serie sowie Kommunikationsprotokolle des Typs Internet enthalten und wenigstens eine Software-Entität (SV_{A}, SV_{B}) beherbergen, **dadurch gekennzeichnet, dass** die Software-Entitäten (SV_{A}, SV_{B}) und die Systeme (S₁) jeweils mit einer Adresse (IP₂, IP_{A}, IP_{B}) des Typs Internet einer zweiten Serie versehen sind, dass jedes System als ein so genanntes virtuelles Netz (SVN_{Y}) des Systems konfiguriert ist, mit dem das System (S₁) selbst und die Software-Entitäten (SV_{A}, SV_{B}) über bestimmte Schnittstellenmodule (11, 20, 30) und bestimmte Softwareschichten (21-22, 30-31), die einen Stapel von Adressen der zweiten Serie und Kommunikationsprotokolle des Typs Internet enthalten, verbunden sind, und dass die Adressen (IP₁, IP₂, IP_{A}, IP_{B}) und die Namen der Systeme (S₁) sowie Software-Entitäten (SR_{A}, SR_{B}), die mit den so genannten virtuellen Netzen (SVN_{Y}) der Systeme verbunden sind, in dem Domänenverzeichnis (DNS₁) in der Weise gespeichert sind, dass eine der Software-Entitäten (SV_{A}, SV_{B}), die irgendeines der Systeme beherbergt, direkt adressiert werden kann.

2. Verfahren nach Anspruch 1, **dadurch gekennzeichnet, dass** es die Schritte des Zuweisens einer Adresse, die ein Präfix und einen Identifizierer für jede der Software-Entitäten (SV_{A}, SV_{B}) umfasst, des Aktualisierens des Domänennamenverzeichnisses (DNS₁) zum Aufzeichnen des Namens und der Adresse dieser Software-Entitäten (SV_{A}, SV_{B}) und des Freigebens der Adresse, derart, dass eine Adresse freigegeben wird, die vorher einer bestimmten Software-Entität (SV_{A}, SV_{B}) zugewiesen war, umfasst.

3. Verfahren nach Anspruch 2, **dadurch gekennzeichnet, dass** die Adressen in Übereinstimmung mit dem Internetprotokoll gebildet werden.

4. Verfahren nach Anspruch 3, **dadurch gekennzeichnet, dass** die Adressenzuweisung dynamisch ist und dass die dynamische Adressenzuweisung zumindest die folgenden Phasen und Schritte umfasst:
- eine Phase der Ausführung der Software-Entität (SV_{A}, SV_{B}) in einem ersten System (S₁), die die Schritte des Zuweisens einer Adresse in Übereinstimmung mit dem Internetprotokoll, des Aktualisierens des Domänennamenverzeichnisses (DSN₁) und des Aufbauens und/oder Akzeptierens von Verbindungen über das Netz (R_{X}) des Typs Internet umfasst;
- eine Phase des Übertragens der Software-Entität (SV_{A}, SV_{B}) des ersten Systems (S₁) an ein zweites System (S₂), die die Schritte des Schließens der aktiven Verbindungen, des Freigebens der Adresse des Typs Internet der Software-Entität (SV_{A}, SV_{B}) und des Aktualisierens des Domänennamenverzeichnisses (DNS₁) umfasst;
- und eine Phase des Ausführens dieser Software-Entität (SV_{A}, SV_{B}) in dem zweiten System (S₂), die die Schritte des Zuweisens einer neuen Adresse IPV6 in Übereinstimmung mit dem Internetprotokoll, des Aktualisierens des Domänennamenverzeichnisses (DNS₁) und des Aufbauens und/oder Akzeptierens neuer Verbindungen über das Netz (R_{X}) des Typs Internet umfasst.

5. Verfahren nach einem der vorhergehenden Ansprüche, **dadurch gekennzeichnet, dass** die Kommunikationsvorgänge zwischen den Software-Entitäten (SV_{A}, SV_{B}) in der Client-Server-Betriebsart erfolgen.

6. Verfahren nach Anspruch 5, **dadurch gekennzeichnet, dass** die Software-Entitäten (SV_{A}, SV_{B}) Client-Objekte oder Server-Objekte sind.

7. Verfahren nach einem der vorhergehenden Ansprüche, **dadurch gekennzeichnet, dass** dann, wenn wenigstens eines der Systeme (S_{N}) aus einer Traube aus wenigstens zwei Maschinen (M₁ bis M_{X}) gebildet ist, die mit demselben Knoten (N) verbunden sind und jeweils eines der so genannten virtuellen Netze (SVN_{M1} bis SVN_{MX}) der Systeme bilden, diesem Knoten eine Adresse (IP_{N}) des Typs Internet der ersten Serie zugeordnet ist, so dass eine Software-Entität (SV_{C}), die eine (M₁) dieser Maschinen beherbergt, mit Hilfe einer Adresse des Typs Internet der zweiten Serie adressiert werden kann.

8. Verfahren nach Anspruch 7, **dadurch gekennzeichnet, dass** wenigstens eine der Software-Entitäten in wenigstens zwei der Maschinen der Traube (S_{N}) doppelt vorhanden ist.

9. Verfahren nach einem der vorhergehenden Ansprüche, **dadurch gekennzeichnet, dass** einem Paar der Software-Entitäten (SV_{A}, SV_{B}), die über eine Internetverbindung kommunizieren, über das Netz (SR_{X}) des Typs Internet Überwachungsbarrieren zugeordnet werden, derart, dass die Verbindung durchgehend gesichert ist.

## Claims

1. Method for communication in a set (2) of distributed systems (S₁) via at least one internet-type network (SR_{X}), said set (2) being divided into at least one domain (D₁) comprising systems (S₁) addressable via said network (SR_{X}) by a first series of internet-type addresses (IP₁) stored in a domain name directory (DNS₁) and each system being connected to said network via a standard interface module (10), standard software layers (12, 13) comprising a stack of addresses of the first series and internet-type communication protocols, and hosting at least one software entity (SV_{A}, SV_{B}), **characterised in that** said software entities (SV_{A}, SV_{B}) and said systems (S₁) are each provided with an internet-type address of a second series (IP₂, IP_{A}, IP_{B}), **in that** each system is configured as what is known as a system virtual network (SVN_{Y}) to which the system itself (S₁) and said software entities (SV_{A}, SV_{B}) are connected via specific interface modules (11, 20, 30) and specific software layers (21-22, 30-31) comprising a stack of addresses of the second series and internet-type communication protocols, and **in that** said addresses (IP₁, IP₂, IP_{A}, IP_{B}) and names of the systems (S₁) and of the software entities (SV_{A}, SV_{B}) connected to said system virtual networks (SVN_{Y}) are stored in said domain directory (DNS₁), so as to be able to address directly any of said software entities (SV_{A}, SV_{B}) hosted in any of said systems (S₁).

2. Method according to Claim 1, **characterised in that** it comprises steps of allocating an address comprising a prefix and an identifier to each of said software entities (SV_{A}, SV_{B}), of updating said domain name directory (DNS₁) in order to record the name and address of these software entities (SV_{A}, SV_{B}) and of releasing addresses so as to clear an address previously allocated to a given software entity (SV_{A}, SV_{B}).

3. Method according to Claim 2, **characterised in that** said addresses are established in accordance with an internet protocol.

4. Method according to Claim 3, **characterised in that** said address allocation is dynamic and **in that** the dynamic address allocation comprises at least the following phases and steps:
- a phase of executing said software entity (SV_{A}, SV_{B}) in a first system (S₁), comprising steps of allocating an address in accordance with the internet protocol, updating said domain name directory (DNS₁) and establishing and/or accepting connections via said internet-type network (R_{X});
- a phase of transferring said software entity (SV_{A}, SV_{B}) from said first system (S₁) into a second system (S₂), comprising steps of closing the active connections, releasing the internet-type address of the software entity (SV_{A}, SV_{B}) and updating said domain name directory (DNS₁);
- and a phase of executing this software entity (SV_{A}, SV_{B}) on said second system (S₂) comprising steps of allocating a new address in accordance with the IPV6 internet protocol, updating said domain name directory (DNS₁), and establishing and/or accepting new connections via said internet-type network (R_{X}).

5. Method according to any one of the preceding claims, **characterised in that** said communications between said software entities (SV_{A}, SV_{B}) take place in client-server mode.

6. Method according to Claim 5, **characterised in that** said software entities (SV_{A}, SV_{B}) are client objects or server objects.

7. Method according to any one of the preceding claims, **characterised in that**, at least one of said systems (S_{N}) being constituted by a cluster of at least two machines (M₁ to M_{*x*}), connected to the same node (N) and each forming one of said system virtual networks (SVN_{M1} to SVN_{M*x*}), said node is associated with an internet-type address (IP_{N}) of said first series, so that it is possible to address a software entity (SV_{C}) hosted by any one (M₁) of said machines by means of an internet-type address of said second series.

8. Method according to Claim 7, **characterised in that** at least one of said software entities is duplicated in at least two of the machines of said cluster (S_{N}).

9. Method according to any one of the preceding claims, **characterised in that** firewalls are associated with a pair of said software entities (SV_{A}, SV_{B}) put into communication by an internet link, via said internet-type network (SR_{X}), so as to protect said link from end to end.
